# EUROPÄISCHE PATENTANMELDUNG

(11) **EP 2 374 949 A1**
(43) Veröffentlichungstag der Anmeldung: **12.10.2011**
(21) Anmeldenummer: 11075044.5
(22) Anmeldetag: 10.03.2011
(51) Int. Cl.: E04B 1/61, F16B 5/00, F24J 2/52

(54) **Formswchlüssige Verbindungseinrichtung für zwei Bauelemente, insbesondere Solarmodule**

(30) Priorität: 08.04.2010 DE 102010014414
(71) Anmelder: SOLON SE, 12489 Berlin (DE)
(72) Erfinder: Schwarze, Sascha Oliver, 12277 Berlin (DE)

(57) **Zusammenfassung**

Formschlüssige Verbindungseinrichtungen (1) mit Verbindungsprofilen (3,4) aus Profilleisten (5,6) mit Hinterschneidungen (7) dienen der schnellen und sicheren Verbindung zweier Bauelementen (2) mittels eines stangenförmigen Verbindungselements (8) mit komplementären Hinterschneidungen (9) miteinander. Für das kostensparende Kunststoff-Spritzgießverfahren in einem einfachen zweigeteilten Formkasten sind bei der Erfindung alle Profilleisten (5,6) in einzelne Profilsegmente (11) aufgeteilt, die mit einem Abstand (10) zueinander angeordnet sind. Die Abstände (10) sind jeweils gleichbreit oder breiter als die Profilsegmente (11) und jedes Profilsegment (11) der einen Profilleiste (5,6) ist in voller Breite gegenüber einem Abstand (10) der anderen Profilleiste (5,6) angeordnet. Zur exakten Abstandhaltung können gleichlange Stege (13) vorgesehen sein, die vor oder hinter den Profilsegmenten (11) angeordnet sind und ihrerseits noch Führungszapfen (16) zum Eingriff in gegenüberliegende Führungsöffnungen (17) zur genauen Positionierung aufweisen können. Die Negativform des zwischen der oberen und der unteren Profilleiste (5,6) geteilten Formkastens wird mäanderförmig derart aufgeteilt, dass die oberen Profilsegmente (11) in der unteren Formkastenhälfte und die unteren Profilsegmente (11) in der oberen Formkastenhälfte abgeformt werden. Die Hinterschneidungen behindern dann die Entformung nicht mehr.

## Beschreibung

### BEZEICHNUNG

Formschlüssige Verbindungseinrichtung für zwei Bauelemente, insbesondere Solarmodule.

### BESCHREIBUNG

Die Erfindung bezieht sich auf eine formschlüssige Verbindungseinrichtung für zwei Bauelemente, insbesondere Solarmodule, mit einem ersten Verbindungsprofil und einem diesem im verbundenen Zustand der Verbindungseinrichtung gegenüberliegenden weiteren Verbindungsprofil, die jeweils einem Bauelement zugeordnet sind und eine obere Profilleiste und eine untere Profilleiste mit Hinterschneidungen aufweisen, in die im verbundenen Zustand ein Verbindungselement mit zu den Hinterschneidungen komplementären Hinterschneidungen eingeschoben ist

Formschlüssige Verbindungseinrichtungen dienen der schnellen, einfachen und lösbaren, aber sicheren Verbindung von zwei Bauelementen miteinander, beispielsweise zwei plattenförmigen Solarmodulen oder Verkleidungsplatten. Dabei kann die formschlüssige Verbindungseinrichtung Teil eines Rahmens oder eines Lagergestells der Bauelemente sein. Gleichzeitig kann die Verbindungseinrichtung zur Verbindung der Bauelemente mit einem Substrat dienen.

Eine formschlüssige Verbindung ist bereits dann ausführbar, wenn die zu verbindenden Bauelemente jeweils Verbindungsprofile mit komplementären Hinterschneidungen aufweisen. Dazu werden dann beide Bauelemente ohne ein Verbindungselement unmittelbar mit den komplementären Hinterschneidungen ihrer Verbindungsprofile ineinander geschoben. Um die damit verbundene Bewegung der ganzen, gegebenenfalls großen und schweren plattenförmigen Bauelemente gegeneinander und die Gefahr der Verkantung zu vermeiden, können die Bauelemente auch in die passende Position gebracht und, ohne sie selbst weiter zu bewegen, ihre Verbindungsprofile mit einem stangenförmigen Verbindungselement verbunden werden, wobei das Verbindungselement beiderseits die zu den Hinterschneidungen an den Verbindungsprofilen der Bauelemente komplementären Hinterschneidungen aufweist. Diese Verbindungstechnik gestattet auch, aus einem Verbund von vielen, in der Fläche mehrzeilig und mehrspaltig angeordneten Bauelementen einzelne Bauelemente herauszulösen, indem nur die Verbindungselemente zu den benachbarten Bauelementen gezogen werden müssen und das gewünschte Bauelement dann aus dem Verband herausgehoben werden kann. Zur Montage der Verbindungseinrichtung müssen beide Bauelemente mit ihren Verbindungsprofilen parallel in einen solchen Abstand zueinander gebracht werden, dass das Verbindungselement mit seinen komplementären Hinterschneidungen in die Hinterschneidungen der Verbindungsprofile einschiebbar ist. Nach dem Einschieben bilden beide Bauelemente einen durch die Verbindungseinrichtung hergestellten form- und kraftschlüssigen, stabilen und nur durch Entfernen des Verbindungselements wieder lösbaren Verbund.

### STAND DER TECHNIK

Aus der DE 20 2007 007 976 U1 ist eine Verbindungseinrichtung insbesondere für Solarmodule bekannt, die zwei Bauelemente durch an Trägern angeordnete Verbindungsprofile mit Hinterschneidungen, in die ein kurzes Verbindungselement mit komlementären Hinterschneidungen eingreift, miteinander verbindet. Dazu wird das Verbindungselement in die Verbindungsprofile eingesetzt, die Bauelemente heran geschoben und die Bauelemente, das Verbindungselement und die Verbindungsprofile mit einer mittig angeordneten Schraube, deren Kopf die Ränder beide Bauelemente übergreift, miteinander verspannt. Das System ist auf die mit der Dachkonstruktion verbundenen Träger mit den integrierten Verbindungsprofilen angewiesen und besitzt damit kein solitäres Verbindungselement für die beiden Bauelemente. Die Träger sind wegen ihrer Ausdehnung und notwendigen Maßhaltigkeit als metallische Strangpressprofile, die Verbindungselemente hingegen als Kunststoff-Gussteile ausgeführt. Die Maßhaltigkeit des Verbunds der Bauelemente wird durch die Verbindungseinrichtung nicht erzwungen. Auch ein Formschluss zwischen den Elementen der Verbindungseinrichtung und den Bauelementen ist nicht gegeben. Für eine mechanisch stabile Verbindung der Bauelemente mit dem Träger müssen mehrere der Verbindungseinrichtungen an jeder Seite der Bauelemente eingesetzt werden.

Aus der EP 1 662 630 B1 ist eine Verbindungsmuffe bekannt, bei der die Verbindung von zwei Bauelementen, hier den Halbschalen der Verbindungsmuffe, mit Hilfe einer Verbindungseinrichtung aus vier Verbindungsprofilen mit je zwei Profilleisten mit Hinterschneidungen und vier Verbindungselementen mit komplementären Hinterschneidungen erfolgt. Die vier Verbindungselemente werden an beiden Enden der aus den beiden Halbschalen zusammengesetzten Verbindungsmuffe jeweils links und rechts über den Trennfugen der Halbschalen zu deren Fixierung den Verbindungsprofilen angesetzt. Sie sind dazu konisch ausgeführt, so dass sie beim Ansatz sehr leicht eingeschoben werden können und gegen Ende der Bewegung zu einer form- und kraftschlüssigen und selbsthaltenden Verbindung der Halbschalen führen. Bei der beschriebenen Verbindung gibt es kein gemeinsames Verbindungselement zur Verbindung der beiden Halbschalen, sondern es werden vier gleiche Verbindungselemente benötigt. Diese befinden sich außerhalb der Halbschalen. Die Halbschalen und Verbindungselemente weisen nur eine geringe Längsausdehnung auf und können wegen ihrer Formgebung durch Kunststoff-Gießverfahren bei einfacher Entformbarkeit hergestellt werden, aber eine sich über die ganze Länge von ausgedehnten Bauelementen erstreckende Verbindung ist mit dieser Verbindungseinrichtung nicht herstellbar.

Aus der DE 10 2007 056 600 A1 für eine Photovoltaikanlage mit einer Matrix aus rahmenlosen Solarmodulen ist zur Verbindung der Solarmodule eine Verbindungseinrichtung bekannt, die den Zusammenhalt über Verbindungsprofile mit oberen und unteren Profilleisten mit Hinterschneidungen in Längsrichtung und einem gemeinsamen Verbindungselement mit komplementären Hinterschneidungen herstellt. Dabei ist die jeweils obere Profilleiste Formbestandteil eines oberen, am Solarmodul angeordneten Verbindungsprofils und die jeweils untere Profilleiste Formbestandteil eines unteren, auf dem Baukörper aufliegend angeordneten Verbindungsprofils. Zur Verbindung wird ein Verbindungselement über die Profilleisten der Verbindungsprofile geschoben. In diesem Fall handelt es sich um ein geteiltes Verbindungselement aus zwei identischen Schienen, die jeweils die beiden unteren und die beiden oberen Profilleisten verbinden. Der stabile Formschluss wird über Schrauben hergestellt, die die beiden Schienen miteinander verspannen. Die Form der Verbindungsprofile und der Schienen des geteilten Verbindungselements sind für ein kostengünstiges Kunststoff-Gießverfahren ungeeignet.

Die DE 20 2006 003 925 U1 offenbart eine gattungsgemäße formschlüssige Verbindungseinrichtung für zwei Bauelemente, insbesondere Solarmodule, mit einem ersten Verbindungsprofil und einem diesem im verbundenen Zustand der Verbindungseinrichtung gegenüberliegenden weiteren Verbindungsprofil, die jeweils einem Bauelement zugeordnet sind und eine obere Profilleiste und eine untere Profilleiste mit Hinterschneidungen aufweisen, in die im verbundenen Zustand ein Verbindungselement mit zu den Hinterschneidungen komplementären Hinterschneidungen eingeschoben ist, von der die vorliegende Erfindung als nächstliegendem Stand der Technik ausgeht. Beschrieben wird darin eine Verbindungseinrichtung, bei der die Verbindung zweier Bauelemente mit einem gemeinsamen Verbindungselement erfolgt, das komplementäre Hinterschneidungen aufweist, die in Hinterschneidungen von Profilleisten der Verbindungsprofile der Bauelemente verschiebbar einsetzbar sind. Zur Herstellung des Form- und Kraftschlusses weist das Verbindungselement beidseitig Zentralmuttern auf, die nach der Montage gegen die Bauelemente geschraubt werden und für eine formschlüssige Verbindung sorgen. Die beschriebene Verbindungseinrichtung ist für Zaunstäbe vorgesehen und besitzt daher nur die notwendige geringe Ausdehnung zur Ausprägung der beiden Zentralgewinde. Bei einer größeren Ausdehnung in der Dicke ohne Zentralmuttern ist eine einfache Herstellung mit einem kostengünstigen Kunststoff-Gießverfahren wegen der Problematik der sehr aufwändigen Entformung von Hinterschneidungen in langen Gussformen nicht möglich.

### AUFGABENSTELLUNG

Ausgehend von dem oben beschriebenen nächstliegenden Stand der Technik ist die **AUFGABE** für die vorliegende Erfindung daher darin zu sehen, eine gattungsgemäße formschlüssige Verbindungseinrichtung für zwei Bauelemente bereitzustellen, die unter Beibehaltung der genannten bekannten Vorteile, insbesondere Maßhaltigkeit über die ganze Länge der zu verbindenden Bauelemente sowie schnelle, sichere und einfache Montage und Demontage, trotzdem kostengünstig herstellbar ist, insbesondere in einem Kunststoff-Gießverfahren. Die erfindungsgemäße **LÖSUNG** für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Bei der Erfindung sind die Profilleisten in einzelne Profilsegmente aufgeteilt, die mit einem Abstand zueinander angeordnet sind. Die Abstände sind jeweils gleichbreit oder breiter als die Profilsegmente. Jedes Profilsegment der oberen Profilleiste ist gegenüber einem Abstand in der unteren Profilleiste und jedes Profilsegments der unteren Profilleiste gegenüber einem Abstand in der oberen Profilleiste angeordnet. In der Projektionsbetrachtung jeweils der oberen Profilleiste auf die untere Profilleiste erscheinen deren Profilsegmente dadurch genau überdeckungsfrei nebeneinander liegend, wenn die Abstände und die Profilsegmente genau gleichbreit sind. Bei Abständen, die breiter sind als die Profilsegmente, erscheinen in der Projektionsbetrachtung der oberen auf die untere Profilleiste die Profilsegmente nun mit Spalten nebeneinander liegend.

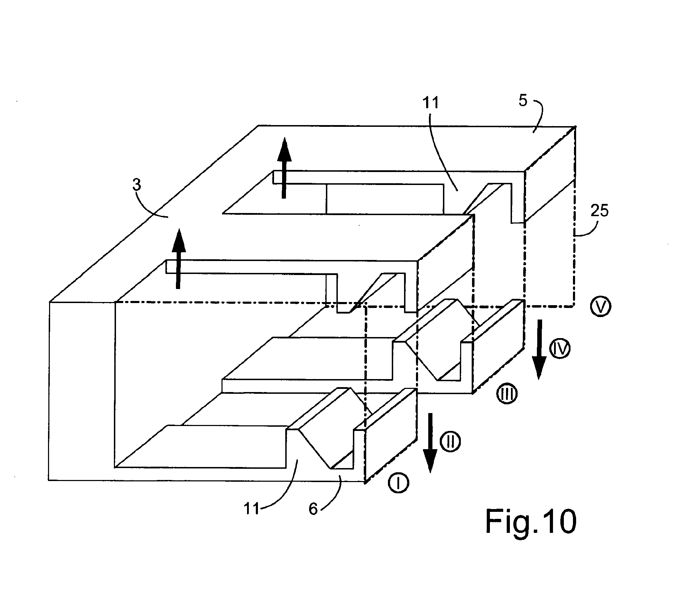

Zur Herstellung der Profilleisten mit Hinterschneidungen kommen grundsätzlich spanende, Strangpress- oder Gießverfahren in Betracht. Aus Kostengründen werden spanende Herstellungsverfahren nur in Spezialfällen zum Einsatz kommen. Mit dem Strangpressverfahren können Verbindungsprofile aus Metall mit entsprechendem Gewicht hergestellt werden. Zur Herstellung aus leichtem Kunststoff kommt das Spritzgießverfahren in Betracht, bei dem allerdings die Hinterschneidungen bekannter Profilleisten aus dem Stand der Technik im Entwurf des Formkastens besondere Probleme aufwerfen. Zur Entformung von Hinterschneidungen muss der Formkasten komplizierte Aufteilungen aufweisen, die gegebenenfalls Grate hervorrufen, die aufwändig entfernt werden müssen. Bei Verwendung von Schiebern in der Gussform, die die Hinterschneidungen formen können, sind Formschrägen zu berücksichtigen, die eine über die ganze Länge der Profilleisten verlaufende notwendige Maßhaltigkeit verhindern. Zur massenhaften Herstellung von Verbindungsprofilen für die erfindungsgemäße formschlüssige Verbindungseinrichtung wird für das Spritzgießverfahren hingegen nur ein einfacher, zweigeteilter Formkasten ohne Schieber oder andere Hilfseinrichtungen benötigt. Die Aufteilung der Profilleisten in Profilsegmente mit Abständen, wobei jedes Profilsegment der oberen Profilleiste gegenüber einem Abstand in der unteren Profilleiste und jedes Profilsegment der unteren Profilleiste gegenüber einem Abstand in der oberen Profilleiste angeordnet ist und die Profilsegmente beider Profilleisten in der Projektionsbetrachtung einander überdeckungsfrei gegenüberstehend erscheinen, verhindert zu gießende Hinterschneidungen und ermöglicht so die Konstruktion eines einfachen geteilten Formkastens. Dazu wird die Negativform im Inneren des zwischen der oberen und der unteren Profilleiste geteilten Formkastens mäanderförmig derart aufgeteilt, dass die oberen Profilsegmente in der unteren Formkastenhälfte und die unteren Profilsegmente in der oberen Formkastenhälfte abgeformt werden. Die zugehörigen Hinterschneidungen behindern dann die Entformung nicht mehr. Nähere Einzelheiten hierzu sind der Figur 10 und der speziellen Beschreibung dazu zu entnehmen.

Bei der grundsätzlichen Ausgestaltung der erfindungsgemäßen formschlüssigen Verbindungseinrichtung für zwei Bauelemente im Hinblick auf eine einfache Entformbarkeit bei einem Kunststoff-Gießverfahren ist nur die überdeckungsfreie Anordnung der Profilsegmente in der Projektionsbetrachtung der oberen auf die untere Profilleiste gefordert. Die Profilsegmente der einander gegenüberliegenden oberen bzw. unteren Profilleisten können sich daher in der Projektionsbetrachtung gegeneinander ganz oder teilweise überdecken, sie greifen bei dieser ersten grundsätzlichen Ausführungsform nicht kammartig ineinander. Durch eine in der Projektionsbetrachtung jeweils der oberen Profilleisten und der unteren Profilleisten beider Verbindungsprofile gegeneinander überdeckungsfreie Anordnung der Profilsegmente im verbundenen Zustand der Verbindungseinrichtung können die Profilsegmente kammartig ineinander greifen und es wird durch eine Anordnung orthogonaler Stege gleicher Länge am Ort der Profilsegmente eine besonders bevorzugte Ausführung der erfindungsgemäßen formschlüssigen Verbindungseinrichtung für zwei Bauelemente ermöglicht. Dabei sind entweder die Profilsegmente an den Vorderseiten der Stege oder die Stege an den Vorderseiten der Profilsegmente angeordnet und die Stirnflächen der Profilsegmente oder der Stege bilden Anschläge für die Beabstandung der beiden Verbindungsprofile im verbundenen Zustand. Bei einer Ausprägung der Verbindungsprofile ohne Stege müssen die Bauelemente zur Herstellung der Verbindung auf dem gegebenenfalls nicht ganz ebenen Untergründen in eine exakte Position einander gegenüber gebracht und während des ganzen Vorgangs des Einschiebens des Verbindungselements in Position gehalten werden. Durch Stege gleicher Länge an den Orten der Profilsegmente wird der erforderliche Abstand beim Zusammenschieben der zwei Bauelemente hergestellt und über die ganze Länge eingehalten. Außerdem werden durch die kammartige Verzahnung bei spaltfreier Ausgestaltung Verschiebungen in Längsrichtung gegeneinander vermieden. Der Verbindungsvorgang ist nun in einfacher Weise für einen Monteur durchführbar. Vorteilhaft für den Herstellungsprozess ist ferner die Ausführung der Stege und Profilsegmente in gleicher Breite und eine einstückige Ausbildung jedes Profilsegments mit dem zugehörigen Steg und/oder jedes Steges oder Profilsegments mit dem zugehörigen Verbindungsprofil und/oder jedes Verbindungsprofils mit dem zugehörigen Bauelement. Durch eine Ausgestaltung der Verbindungsprofile als ein gemeinsames Gussteil wird die Herstellung weiter vereinfacht.

Durch einen Führungszapfen an der Stirnfläche jedes Profilsegments oder Stegs, der in eine Führungsöffnung im Bereich des Anschlags am jeweils gegenüberliegenden Verbindungsprofil im verbundenen Zustand der Verbindungseinrichtung eingreift, wird die erfindungsgemäße formschlüssige Verbindungseinrichtung für zwei Bauelemente vorteilhaft weitergebildet. Die Führungszapfen verhindern nach dem Eingriff in ihre Führungsöffnungen eine bisher noch mögliche vertikale Verschiebung und bei Abständen, die breiter sind als die Profilsegmente auch eine Verschiebung in Längsrichtung der Verbindung der beiden Bauelemente gegeneinander durch die das Einsetzen des Verbindungselements erschwert würde. Mit den Zapfen ist ein solcher Versatz nicht mehr möglich.

Bevorzugte Ausführungsformen werden auch durch eine gleichbreite Ausbildung aller Profilsegmente und eine gleichbreite Ausbildung aller Abstände und darauf aufbauend eine formidentische Ausbildung der beiden Verbindungsprofile erreicht. Für symmetrisch ausgebildete Verbindungsprofile spricht die Herstellbarkeit in derselben Form. Dadurch werden die Gesamtkosten weiter gesenkt. Eine Ausbildung nach Art einer doppelten Schwalbenschwanzverbindung ist eine mögliche Variante der Hinterschneidungen der Profilleisten.

Weiterhin ergeben sich bevorzugte Ausführungen der erfindungsgemäßen formschlüssigen Verbindungseinrichtung für zwei Bauelemente durch eine Zweiteilung des Verbindungselements im Bereich einer mittleren Teilungsebene in der Längsrichtung der Verbindungseinrichtung in einen oberen Verbindungskörper und einen unteren Verbindungskörper, die im verbundenen Zustand der Verbindungseinrichtung in der Teilungsebene aneinander anliegende Rückseiten aufweisen, durch eine schräg verlaufende Teilungsebene des Verbindungselements sowie durch eine formidentische Ausbildung der beiden Verbindungskörper. Das Einschieben des Verbindungselements bei der Verbindung der Verbindungsprofile zur Erzielung einer form- und kraftschlüssigen, stabilen und Kräfte aufnehmenden Verbindung zweier Bauelemente wird bei in der Länge ausgedehnter Form mit dem Fortschritt des Einschiebens durch steigende Reibungskräfte immer schwieriger. Wenn die Verwendung von schwerem Werkzeug vermieden und eine möglichst einfache Verbindungsmethode angestrebt werden soll, ist die Teilung des Verbindungselements mittels einer schrägen mittleren Teilungsebene erforderlich. Die schräge Teilungsebene sorgt für einen oberen und einen unteren Verbindungskörper, die beide an einem Ende dicker und am anderen Ende dünner ausgebildet sind als der Mittelwert bei einer ebenen Teilung. Bei dem Vorgang der Verbindung kann der untere Verbindungskörper leicht und ohne großen Widerstand mit dem dickeren Ende zuerst in die unteren Profilsegmente eingeschoben werden. Wird nun der obere Verbindungskörper mit dem dünneren Ende zuerst in die oberen Profilsegmente eingeschoben, so ist dies solange ohne Widerstand möglich, wie die beiden Verbindungskörper sich an ihren Rückseiten nicht berühren. Wenn dies gegen Ende der Einschubbewegung der Fall ist, wird die Reibungskraft ansteigen, sodass nur das letzte Ende der Verbindung bis zur vollständigen Überdeckung beider Verbindungskörper unter Überwindung von Reibung geschlossen werden muss. Die kraftschlüssige und selbsthemmende Verbindung beider Verbindungskörper sorgt für eine spielfreie Verspannung der Verbindungseinrichtung, die damit die Verschiebung der verbundenen Bauelemente gegeneinander in allen drei Dimensionen sicher verhindert.

Zur Fixierung der mit Hilfe der erfindungsgemäßen Verbindungseinrichtung für zwei Bauelemente gebildeten Formationen am Untergrund können vorteilhaft offene oder geschlossene Ösen an den Enden des Verbindungselements angeordnet sein, in die Spannseile einführbar sind. Für die Verankerung der Spannseile gegen das Abheben der Bauelemente bei Windsog werden nur wenige Ankerpunkte benötigt, die außerdem an den Rändern des Bauwerks liegen können und gegebenenfalls die Dachhaut nicht durchdringen müssen.

Besonders vorteilhafte Weiterbildungen der erfindungsgemäßen formschlüssigen Verbindungseinrichtung für zwei Bauelemente werden durch eine Ausbildung der Verbindungsprofile und/oder des Verbindungselements als materialsparende Hohlprofile und durch eine Ausführung des Verbindungsprofils und/oder des Verbindungselements in einem Kunststoff-Spritzguss erreicht. Die grundlegende konstruktive Ausführungsform der hier vorgestellten Verbindungseinrichtung ist für die Herstellung in einer Spritzgießform optimiert.

### AUSFÜHRUNGSBEISPIELE

Bevorzugte Ausbildungsformen der formschlüssigen Verbindungseinrichtung für zwei Bauelemente nach der Erfindung werden nachfolgend anhand der schematischen Figuren näher erläutert. Es zeigt
- **FIGUR 1**: einen Querschnitt durch eine formschlüssige Verbindungseinrichtung aus dem Stand der Technik,
- **FIGUR 2**: eine erste Ausführungsform mit kurzen Profilsegmenten in verbundener perspektivischer Darstellung,
- **FIGUR 3**: eine Projektionsbetrachtung von oben auf das erste Verbindungsprofil aus Figur 2,
- **FIGUR 4**: eine andere Ausführungsform mit Profilsegmenten mit Stegen in offener perspektivischer Darstellung,
- **FIGUR 5**: die Ausführungsform aus Figur 4 in verbundener perspektivischer Darstellung,
- **FIGUR 6**: eine Projektionsbetrachtung von vorne auf die Ausführungsform aus den Figuren 4 und 5,
- **FIGUR 7**: eine weitere Ausführungsform mit Profilsegmenten an Stegen mit Führungszapfen in offener perspektivischer Darstellung,
- **FIGUR 8**: eine Projektionssicht von vorne auf eine Ausführungsform mit einer Vertauschung der Profilsegmente mit den Stegen,
- **FIGUR 9**: eine perspektivische Darstellung des Verbindungselements mit schräger Teilungsebene und
- **FIGUR 10**: eine perspektivische Darstellung des einen Verbindungsprofils mit einer Formtrennlinie.

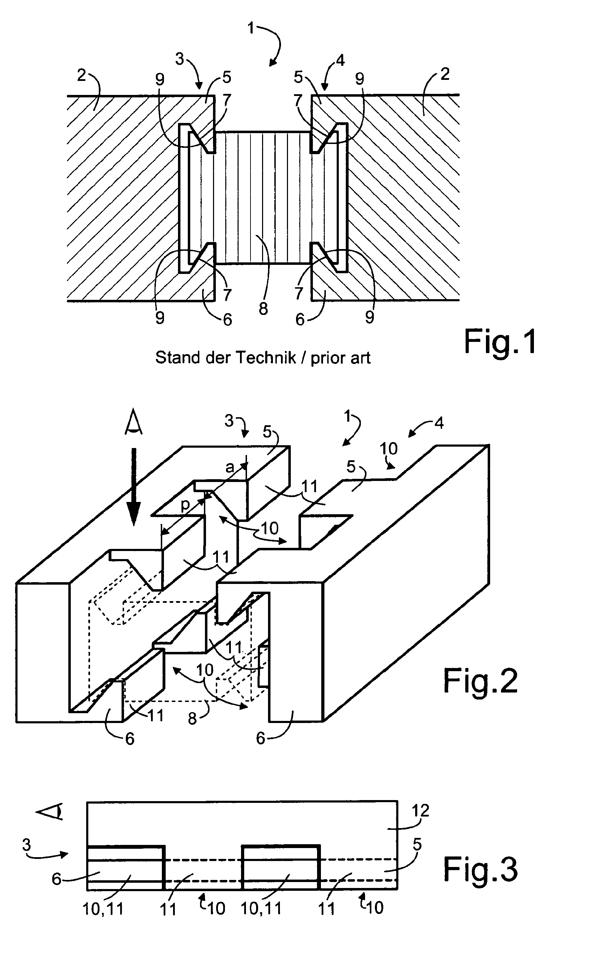

**Figur 1** zeigt einen Querschnitt durch eine formschlüssige Verbindungseinrichtung **1** für zwei Bauelemente **2** aus dem Stand der Technik mit einem ersten Verbindungsprofil **3** und einem diesem im verbunden Zustand gegenüberliegenden Verbindungsprofil **4,** die jeweils einem Bauelement **2** zugeordnet sind und eine obere Profilleiste **5** und eine untere Profilleiste **6** aufweisen, die Hinterschneidungen **7** aufweisen, in die im verbundenen Zustand ein Verbindungselement **8** mit zu den Hinterschneidungen **7** komplementären Hinterschneidungen **9** eingeschoben ist. Die hier dargestellte Ausführungsform ist musterhaft und steht für eine Vielzahl möglicher Ausführungen hinsichtlich der Ausgestaltung der Profilleisten **6,7**. In der Regel werden derartige Verbindungen zweier Bauelemente **2** ohne ein Verbindungselement **8** ausgeführt. Dazu weist das erste Verbindungsprofil **3** zum Beispiel Hinterschneidungen **7** und das gegenüberliegende Verbindungsprofil **4** komplementäre Hinterschneidungen **9** auf, so dass beide Bauelemente **2** unmittelbar ineinander einsetzbar sind. Die hier dargestellte Ausführungsform mit einem Verbindungselement **8** hat den Vorteil, dass beide Verbindungsprofile **3,4** identisch ausgeführt werden können. Weiterhin müssen so nicht die Bauelemente **2** selbst zur Verbindung gegeneinander verschoben werden, sondern es muss lediglich das Verbindungselement **8** eingesetzt werden.

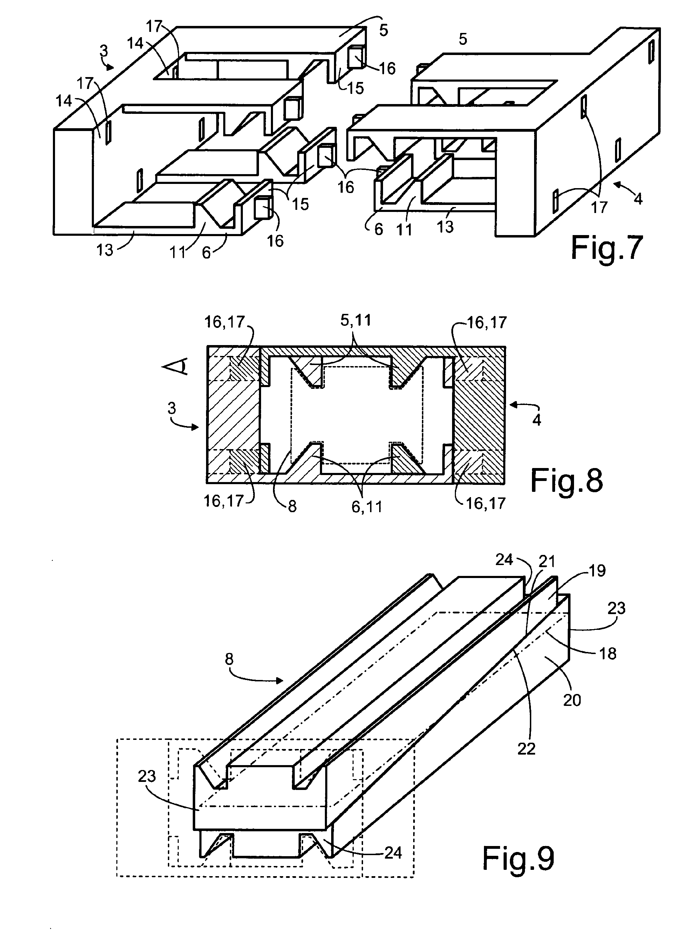

**Figur 2** zeigt eine erste Ausführungsform der formschlüssigen Verbindungseinrichtung **1** für zwei Bauelemente **2** in verbundener perspektivischer Darstellung. Hierin sind die oberen und unteren Profilleisten **5,6** jeweils in mehrere, mit einem Abstand **10** zueinander angeordnete einzelne Profilsegmente **11** ausgebildet, wobei die Breite **a** des Abstands **10** zumindest gleich der Breite **p** des Profilsegments **11** ist. Ferner ist jedes Profilsegment **11** der oberen Profilleiste **5** gegenüber einem Abstand 10 in der unteren Profilleiste **6** und jedes Profilsegment **11** der unteren Profilleiste **6** gegenüber einem Abstand **10** in der oberen Profilleiste **5** angeordnet, wobei in der Projektionsbetrachtung (siehe Figur 3) jeweils der oberen Profilleiste **3** auf die untere Profilleiste **4** deren Profilsegmente **11** überdeckungsfrei nebeneinander liegend erscheinen. In der Darstellung sind beide Verbindungsprofile **3,4** in der verbundenen Position dargestellt, wobei das Verbindungselement **8** gestrichelt angedeutet ist. Die Breite **a** des Abstands **10** soll zumindest der Breite **p** des Profilsegments **11** entsprechen, das heißt, die Breite **a** des Abstands **10** kann auch größer sein als die Breite **p** des Profilsegments **11**, keinesfalls jedoch kleiner. Die Ausbildung der Profilleisten **5,6** in Profilsegmente **11** mit Abständen **10** und ihrer Anordnung "auf Lücke" ist Voraussetzung für eine Herstellung der Verbindungsprofile **3,4** in einem kostengünstigen Kunststoff-Spritzgießverfahren mit einem einfachen geteilten Formkasten ohne Hinterschneidungen, dessen Formtrennlinie in Figur 9 angedeutet und beschrieben ist.

**Figur 3** zeigt eine Projektionsbetrachtung von oben auf das erste Verbindungsprofil **3** aus Figur 2. Dabei ist die Oberseite **12** des ersten Verbindungsprofils **3** mit der oberen Profilleiste **5** und zwei angeformten Profilsegmenten **11** sichtbar. Sie überdecken spaltfrei die Abstände **10** der unteren Profilleiste **6**. Die verdeckten Hinterschneidungen **7** der Profilsegmente **11** der oberen Profilleiste 5 sind durch gestrichelt Linien angedeutet. Die Profilsegmente **11**, mit den die Hinterschneidungen darstellenden durchgezogenen Linien der unteren Profilleiste **6** sind durch die Abstände **11** der oberen Profilleiste **5** sichtbar. Die orthogonale Projektionsbetrachtung zeigt eine spaltfreie Anordnung von Profilsegmenten **11** und Abständen **10** zwischen den oberen und unteren Profilleisten **5,6**.

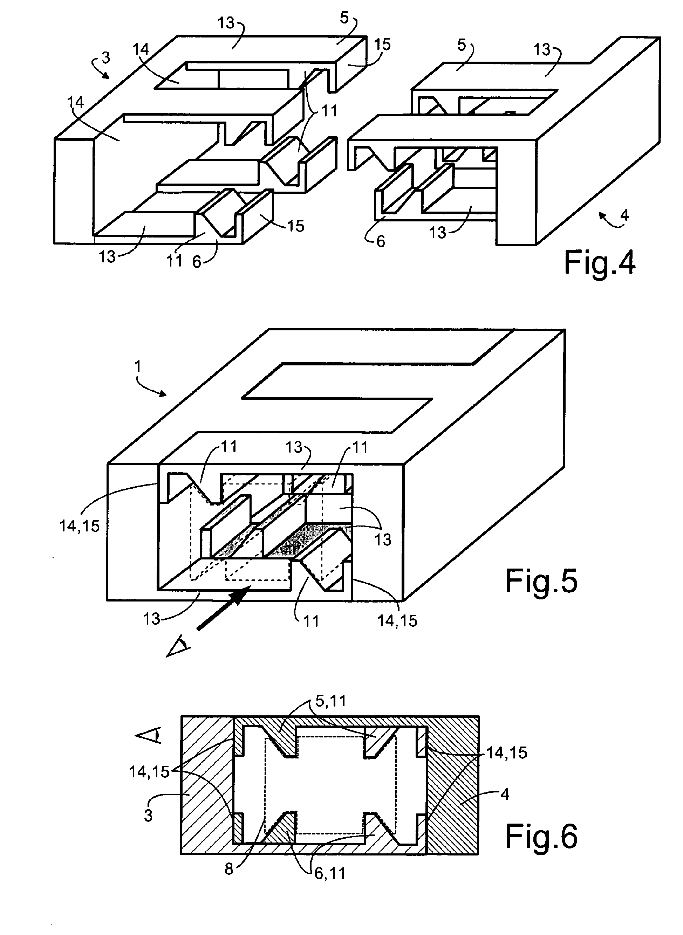

**Figur 4** zeigt eine andere Ausführungsform der formschlüssigen Verbindungseinrichtung **1** für zwei Bauelemente **2**. Bei dieser Ausführungsform sind die Profilsegmente **11** der oberen und unteren Profilleisten **5,6** beider Verbindungsprofile **3,4** an Stegen **13** angeordnet. Zur Verbindung beider Verbindungsprofile **3,4** müssen die Profilsegmente **11** an ihren Stegen **13** kammartig ineinander geschoben werden. Dazu ist neben der für beide Verbindungsprofile **3,4** geltenden überdeckungsfreien Anordnung der Profilsegmente **11** bei Projektionsbetrachtung von oben eine ebensolche überdeckungsfreie Anordnung der Profilsegmente **11** bei Projektionsbetrachtung von den Seiten der Verbindungsprofile **3,4** erforderlich, damit sich die Profilsegmente **11** an ihren Stegen **13** nicht durchdringen. Bei dieser Ausführungsform dienen die Stege **13** der besonders einfachen Herstellung eines exakten Abstands der Verbindungsprofile **3,4** zum Einschieben des Verbindungselements **8**, indem beide Verbindungsprofile **3,4** soweit ineinander geschoben werden, dass die Profilsegmente eine Anlagefläche **14** an dem jeweils gegenüberliegenden Verbindungsprofil **3,4** berühren. Weiterhin können dazu die Profilsegmente **11** Stirnflächen **15** aufweisen, um die Anlagefläche zu vergrößern.

**Figur 5** zeigt die Ausführungsform der formschlüssigen Verbindungseinrichtung **1** für zwei Bauelemente **2** aus Figur 4 in verbundener perspektivischer Darstellung. Die Profilsegmente **11** an ihren Stegen **13**, die von beiden Verbindungsprofilen **3,4** her kammartig nebeneinander liegen und deren Stirnflächen **15** die Anlageflächen **14** berühren, verdecken sich in dieser Ansicht teilweise gegenseitig. Zur besseren Sichtbarkeit ist ein Profilsegment **11** an seinem Steg **13** grau gefärbt. Außerdem ist das Verbindungselement **8** gestrichelt eingezeichnet.

**Figur 6** zeigt eine Projektionsbetrachtung von vorne auf die Ausführungsform der formschlüssigen Verbindungseinrichtung **1** für zwei Bauelemente **2** aus den Figuren 4 und 5. Bei orthogonaler Projektion zeigt sich wieder das bekannte symmetrische Profil dieser Ausführungsform. Die Verbindungsprofile **3,4** sind kammartig verschränkt und ihre Profilleisten **5,6** mit den Stirnflächen **15** berühren die Anlageflächen **14** an der jeweils gegenüberliegenden Seite und bilden so den exakten Abstand zum Einschieben des Verbindungselements **8**.

**Figur 7** zeigt eine weitere Ausführungsform der formschlüssigen Verbindungseinrichtung **1** für zwei Bauelemente **2** mit Profilsegmenten **11** an Stegen **13**. Die Stirnflächen **15** der Profilsegmente **11** weisen hier Führungszapfen **16** auf, die im verbundenen Zustand in komplementäre Aufnahmeöffnungen **17** in der Fläche des jeweils gegenüberliegenden Verbindungsprofils **3,4** eingreifen. Die Führungszapfen **16** erfüllen durch eine saubere Führung der Profilsegmente **11** an ihren Stegen **13** im Wesentlichen drei Aufgaben. Zum Ersten lassen keinen vertikalen Versatz der Verbindungsprofile **3,4** mit ihren angeschlossenen Bauelementen **2** zu, der das Einschieben des Verbindungselements **8** erschweren würde. Zum Zweiten wird durch die Führung ein horizontaler Versatz in Längsrichtung der Verbindungsprofile **3,4** verhindert, der ohne die Führungszapfen **16** entstehen könnte, wenn die Breite a der Abstände **10** größer ist als die Breite p der Profilsegmente **11**. Da zum Beispiel durch Weglassen einzelner Profilsegmente **11** die Breite **a** der Abstände **10** um ein mehrfaches größer sein kann als die Breite **p** der Profilsegmente **11**, kann der Versatz in Längsrichtung erheblich sein und sich beim Einschieben des Verbindungselements **8** noch verändern. Das ordentliche Bild des Verbunds der Bauelemente **2** würde dadurch deutlich leiden, beziehungsweise es wäre immer ein aufwändiges Nachjustieren erforderlich. Zum Dritten schließlich wird ein Aufweiten der Verbindungseinrichtung **1** beim Einschieben des Verbindungselements **8** verhindert. Für eine feste und spielfreie Verbindung muss das Verbindungselement **8** von den Profilleisten **5,6** der Verbindungselemente **3,4** sicher festgehalten werden. Das kann bei dieser Form der Verbindungseinrichtung **1** nur durch Reibung geschehen. Dem Reibungsdruck durch das Verbindungselement **8** stehen die Profilsegmente **11** an ihren Stegen **13** gegenüber, die dabei entsprechend ihrer Steifheit mehr oder weniger nach oben und unten ausweichen, somit die Reibung verringern und den Formschluss in der Verbindungseinrichtung **1** teilweise aufheben. Wenn aber die Führungszapfen **16** in die Aufnahmeöffnungen **17** eingeführt sind, kann keine Aufweitung mehr stattfinden, die Reibung wird nicht verringert und der Formschluss bleibt vollständig erhalten.

**Figur 8** zeigt eine Projektionssicht von vorne auf eine Ausführungsform der formschlüssigen Verbindungseinrichtung **1** für zwei Bauelemente **2** mit einer Vertauschung der Profilsegmente **11** mit den Stegen **13**. Da in diesem Fall die Stege **13** mit ihren Führungszapfen **16** lediglich Führungsaufgaben erfüllen und keine wesentliche Reibungskraft aufnehmen, können sie auch schmaler als die Profilsegmente **11** ausgeführt werden.

**Figur 9** zeigt eine perspektivische Darstellung des Verbindungselements **8**. Die hier gezeigte Ausführungsform weist eine schräge Zweiteilung symmetrisch zu einer mittleren Teilungsebene **18** in der Längsrichtung der Verbindungseinrichtung **1** auf. Dadurch entsteht ein oberer Verbindungskörper **19** und ein unterer Verbindungskörper **20**, die im Bereich der Teilungsebene **18** aneinander anliegende Rückseiten **21,22** aufweisen. Die beiden Verbindungskörper **19,20** sind durch die symmetrische Zweiteilung formidentisch ausgebildet. Durch die schräge Zweiteilung wird die Montage des Verbindungselements **8** wesentlich erleichtert. Nach dem Zusammenführen der beiden Verbindungsprofile **3,4** in ihre Verbindungsstellung kann der untere Verbindungskörper **20** mit seinem dickeren Ende **23** voran kraftlos in die unteren Profilleisten **6** eingeführt werden. Wenn anschließend der obere Verbindungskörper **19** mit seinem dünneren Ende **24** voran über dem unteren Verbindungskörper **20** in die oberen Profilleisten **5** eingeführt wird, ist diese Bewegung solange kraftlos möglich, wie noch Spiel zwischen den Rückseiten **21,22** der Verbindungskörper **19,20** einerseits und zwischen diesen und den Profilleisten **5,6** besteht. Erst wenn im letzten Teil der Bewegung alle Teile einander berühren und wachsende Reibung auftritt, muss eine Kraft zum vollständigen Schließen der Verbindungseinrichtung **1** aufgewendet werden. Bei einer einstückigen Ausführung des Verbindungselements **8** wäre über den gesamten Bewegungsweg eine hohe Reibung aufzubringen und ein Einschieben des Verbindungselements **8** nicht ohne Werkzeug möglich. Dasselbe gilt in beiden Fällen für das Lösen der Verbindung.

**Figur 10** zeigt eine perspektivische Darstellung des ersten Verbindungsprofils **3** der formschlüssigen Verbindungseinrichtung **1** für zwei Bauelemente **2** mit einer Formtrennlinie **25**. Zur leichten Entformung der Hinterschneidungen **7** der Profilsegmente **11** kann der Formkasten in einen oberen und einen unteren Formteil geteilt werden. Wenn die Teilung an Ebenen **I** bis **V** entlang der Formtrennlinie **25** erfolgt, werden die Profilsegmente **11** der oberen Profilleiste **5** durch den unteren Formteil abgeformt und die Profilsegmente **11** der unteren Profilleiste **6** durch den oberen Formteil abgeformt. Beim Abziehen der Formteile nach oben in Richtung der aufwärts weisenden Pfeile und nach unten in Richtung der abwärts weisenden Pfeile stehen dann keine Hinterschneidungen im Weg. Für ein einfaches Herstellungsverfahren als Gussteile in einer Form ist somit die Einteilung der Profilleisten **5,6** in Profilsegmente **11** mit Abständen **10** und deren überdeckungsfreie Anordnung in der Projektionsbetrachtung von oben eine Grundvoraussetzung.

### BEZUGSZEICHENLISTE

- 1: Verbindungseinrichtung
- 2: Bauelement
- 3: erstes Verbindungsprofil
- 4: weiteres Verbindungsprofil
- 5: obere Profilleiste
- 6: untere Profilleiste
- 7: Hinterschneidung
- 8: Verbindungselement
- 9: komplementäre Hinterschneidung
- 10: Abstand
- 11: Profilsegment
- 12: Oberfläche von 3
- 13: Steg
- 14: Anlagefläche
- 15: Stirnfläche
- 16: Führungszapfen
- 17: Führungsöffnung
- 18: mittlere Teilungsebene
- 19: oberer Verbindungskörper
- 20: unterer Verbindungskörper
- 21: Rückseite von 19
- 22: Rückseite von 20
- 23: dickeres Ende
- 24: dünneres Ende
- 25: Formtrennlinie

## Patentansprüche

1. Formschlüssige Verbindungseinrichtung (1) für zwei Bauelemente (2), insbesondere Solarmodule, mit einem ersten Verbindungsprofil (3) und einem diesem im verbundenen Zustand der Verbindungseinrichtung (1) gegenüberliegenden weiteren Verbindungsprofil (4), die jeweils einem Bauelement (2) zugeordnet sind und eine obere Profilleiste (5) und eine untere Profilleiste (6) mit Hinterschneidungen (7) aufweisen, in die im verbundenen Zustand ein Verbindungselement (8) mit zu den Hinterschneidungen (7) komplementären Hinterschneidungen (9) eingeschoben ist,
**GEKENNZEICHNET DURCH**
eine Ausbildung der oberen Profilleiste (5) und der unteren Profilleiste (6) jeweils in mehrere, mit einem Abstand (10) zueinander angeordnete einzelne Profilsegmente (11), wobei die Abstände (10) gleichbreit oder breiter sind als die Profilsegmente (11), und eine in der Projektionsbetrachtung der oberen und unteren Profilleisten (5,6) aufeinander überdeckungsfreie Anordnung der Profilsegmente (11) der oberen Profilleiste (5) gegenüber den Profilsegmenten (11) der unteren Profilleiste (6).

2. Formschlüssige Verbindungseinrichtung (1) nach Anspruch 1, **GEKENNZEICHNET DURCH**
eine in der Projektionsbetrachtung jeweils der oberen Profilleisten (5) und der unteren Profilleisten (6) beider Verbindungsprofile (3,4) aufeinander überdeckungsfreie Anordnung der Profilsegmente (11) im verbundenen Zustand der Verbindungseinrichtung (1).

3. Formschlüssige Verbindungseinrichtung (1) nach Anspruch 2, **GEKENNZEICHNET DURCH**
orthogonale Stege (13) gleicher Länge mit einer Anordnung entweder der Profilsegmente (11) an den Vorderseiten der Stege (13) oder der Stege (13) an den Vorderseiten der Profilsegmente (11) mit einer Ausbildung der Stirnflächen (15) der Profilsegmente (11) oder der Stege (13) als Anschläge für eine Beabstandung der beiden Verbindungsprofile (3,4) im verbundenen Zustand der Verbindungseinrichtung (1).

4. Formschlüssige Verbindungseinrichtung (1) nach Anspruch 3, **GEKENNZEICHNET DURCH**
gleichbreite Ausbildung der Stege (13) und der Profilsegmente (11).

5. Formschlüssige Verbindungseinrichtung (1) nach Anspruch 3, **GEKENNZEICHNET DURCH**
eine einstückige Ausbildung jedes Profilsegments (11) mit dem zugehörigen Steg (13) und/oder jedes Steges (13) mit dem zugehörigen Verbindungsprofil (3,4) und/oder jedes Verbindungsprofils (3,4) mit dem zugehörigen Bauelement (2).

6. Formschlüssige Verbindungseinrichtung (1) nach Anspruch 3, **GEKENNZEICHNET DURCH**
einen Führungszapfen (16) an der Stirnfläche (15) jedes Profilsegments (11) oder Stegs (13), der in eine Führungsöffnung (17) im Bereich des Anschlags am jeweils gegenüberliegenden Verbindungsprofil (3,4) im verbundenen Zustand der Verbindungseinrichtung (1) eingreift.

7. Formschlüssige Verbindungseinrichtung (1) nach Anspruch 1, **GEKENNZEICHNET DURCH**
eine gleichbreite Ausbildung aller Profilsegmente (11) und/oder eine gleichbreite Ausbildung aller Abstände (10).

8. Formschlüssige Verbindungseinrichtung (1) nach Anspruch 1, **GEKENNZEICHNET DURCH**
eine formidentische Ausbildung der beiden Verbindungsprofile (3,4).

9. Formschlüssige Verbindungseinrichtung (1) nach Anspruch 1, **GEKENNZEICHNET DURCH**
eine Ausbildung der Hinterschneidungen (7) und der komplementären Hinterschneidungen (9) nach Art einer doppelten Schwalbenschwanzverbindung.

10. Formschlüssige Verbindungseinrichtung (1) nach Anspruch 1, **GEKENNZEICHNET DURCH**
eine Zweiteilung des Verbindungselements (8) im Bereich einer mittleren Teilungsebene (18) in der Längsrichtung der Verbindungseinrichtung (1) in einen oberen Verbindungskörper (19) und einen unteren Verbindungskörper (20), die im verbundenen Zustand der Verbindungseinrichtung (1) in der Teilungsebene aneinander anliegende Rückseiten (21,22) aufweisen.

11. Formschlüssige Verbindungseinrichtung (1) nach Anspruch 8, **GEKENNZEICHNET DURCH**
eine schräg verlaufende Teilungsebene des Verbindungselements (8).

12. Formschlüssige Verbindungseinrichtung (1) nach Anspruch 8, **GEKENNZEICHNET DURCH**
eine formidentische Ausbildung der beiden Verbindungskörper (19,20).

13. Formschlüssige Verbindungseinrichtung (1) nach Anspruch 1, **GEKENNZEICHNET DURCH**
offene oder geschlossene Ösen an den Enden des Verbindungselements (8), in die Spannseile einführbar sind.

14. Formschlüssige Verbindungseinrichtung (1) nach Anspruch 1, **GEKENNZEICHNET DURCH**
eine Ausbildung der Verbindungsprofile (3,4) und/oder des Verbindungselements (8) als materialsparende Hohlprofile.

15. Formschlüssige Verbindungseinrichtung (1) nach Anspruch 1, **GEKENNZEICHNET DURCH**
eine Ausführung der Verbindungsprofile (3,4) und/oder des Verbindungselements (8) in einem Kunststoff-Spritzguss.

## Geänderte Patentansprüche

### Geänderte Patentansprüche gemäss Regel 137(2) EPÜ.

**1.** Formschlüssige Verbindungseinrichtung (1) für zwei Bauelemente (2) mit einem ersten Verbindungsprofil (3) und einem diesem im verbundenen Zustand der Verbindungseinrichtung (1) gegenüberliegenden weiteren Verbindungsprofil (4), die jeweils einem Bauelement (2) zugeordnet sind und eine obere Profilleiste (5) und eine untere Profilleiste (6) mit Hinterschneidungen (7) aufweisen, in die im verbundenen Zustand ein Verbindungselement (8) mit zu den Hinterschneidungen (7) komplementären Hinterschneidungen (9) eingeschoben ist,
**GEKENNZEICHNET DURCH**
eine Ausbildung der oberen Profilleiste (5) und der unteren Profilleiste (6) jeweils in mehrere, mit einem Abstand (10) zueinander angeordnete einzelne Profilsegmente (11), wobei die Abstände (10) gleichbreit oder breiter sind als die Profilsegmente (11), und eine Anordnung jedes Profilsegments (11) der oberen Profilleiste (5) gegenüber einem Abstand (10) in der unteren Profilleiste (6) und jedes Profilsegments (11) der unteren Profilleiste (6) gegenüber einem Abstand (10) in der oberen Profilleiste (5).

**2.** Formschlüssige Verbindungseinrichtung (1) nach Anspruch 1,
**GEKENNZEICHNET DURCH**
eine in der Projektionsbetrachtung jeweils der oberen Profilleisten (5) und der unteren Profilleisten (6) beider Verbindungsprofile (3,4) aufeinander überdeckungsfreie Anordnung der Profilsegmente (11) im verbundenen Zustand der Verbindungseinrichtung (1).

**3.** Formschlüssige Verbindungseinrichtung (1) nach Anspruch 2,
**GEKENNZEICHNET DURCH**
orthogonale Stege (13) gleicher Länge mit einer Anordnung entweder der Profilsegmente (11) an den Vorderseiten der Stege (13) oder der Stege (13) an den Vorderseiten der Profilsegmente (11) mit einer Ausbildung der Stirnflächen (15) der Profilsegmente (11) oder der Stege (13) als Anschläge für eine Beabstandung der beiden Verbindungsprofile (3,4) im verbundenen Zustand der Verbindungseinrichtung (1).

**4.** Formschlüssige Verbindungseinrichtung (1) nach Anspruch 3,
**GEKENNZEICHNET DURCH**
gleichbreite Ausbildung der Stege (13) und der Profilsegmente (11).

**5.** Formschlüssige Verbindungseinrichtung (1) nach Anspruch 3,
**GEKENNZEICHNET DURCH**
eine einstückige Ausbildung jedes Profilsegments (11) mit dem zugehörigen Steg (13) und/oder jedes Steges (13) mit dem zugehörigen Verbindungsprofil (3,4) und/oder jedes Verbindungsprofils (3,4) mit dem zugehörigen Bauelement (2).

**6.** Formschlüssige Verbindungseinrichtung (1) nach Anspruch 3,
**GEKENNZEICHNET DURCH**
einen Führungszapfen (16) an der Stirnfläche (15) jedes Profilsegments (11) oder Stegs (13), der in eine Führungsöffnung (17) im Bereich des Anschlags am jeweils gegenüberliegenden Verbindungsprofil (3,4) im verbundenen Zustand der Verbindungseinrichtung (1) eingreift.

**7.** Formschlüssige Verbindungseinrichtung (1) nach einem oder mehreren der vorangehenden Ansprüche,
**GEKENNZEICHNET DURCH**
eine gleichbreite Ausbildung aller Profilsegmente (11) und/oder eine gleichbreite Ausbildung aller Abstände (10).

**8.** Formschlüssige Verbindungseinrichtung (1) nach einem oder mehreren der vorangehenden Ansprüche,
**GEKENNZEICHNET DURCH**
eine formidentische Ausbildung der beiden Verbindungsprofile (3,4).

**9.** Formschlüssige Verbindungseinrichtung (1) nach einem oder mehreren der vorangehenden Ansprüche,
**GEKENNZEICHNET DURCH**
eine Ausbildung der Hinterschneidungen (7) und der komplementären Hinterschneidungen (9) nach Art einer doppelten Schwalbenschwanzverbindung.

**10.** Formschlüssige Verbindungseinrichtung (1) nach einem oder mehreren der vorangehenden Ansprüche,
**GEKENNZEICHNET DURCH**
eine Zweiteilung des Verbindungselements (8) im Bereich einer mittleren Teilungsebene (18) in der Längsrichtung der Verbindungseinrichtung (1) in einen oberen Verbindungskörper (19) und einen unteren Verbindungskörper (20), die im verbundenen Zustand der Verbindungseinrichtung (1) in der Teilungsebene aneinander anliegende Rückseiten (21,22) aufweisen.

**11.** Formschlüssige Verbindungseinrichtung (1) nach Anspruch 8,
**GEKENNZEICHNET DURCH**
eine schräg verlaufende Teilungsebene des Verbindungselements (8).

**12.** Formschlüssige Verbindungseinrichtung (1) nach Anspruch 8,
**GEKENNZEICHNET DURCH**
eine formidentische Ausbildung der beiden Verbindungskörper (19,20).

**13.** Formschlüssige Verbindungseinrichtung (1) nach einem oder mehreren der vorangehenden Ansprüche,
**GEKENNZEICHNET DURCH**
offene oder geschlossene Ösen an den Enden des Verbindungselements (8), in die Spannseile einführbar sind.

**14.** Formschlüssige Verbindungseinrichtung (1) nach einem oder mehreren der vorangehenden Ansprüche,
**GEKENNZEICHNET DURCH**
eine Ausbildung der Verbindungsprofile (3,4) und/oder des Verbindungselements (8) als materialsparende Hohlprofile.

**15.** Formschlüssige Verbindungseinrichtung (1) nach einem oder mehreren der vorangehenden Ansprüche,
**GEKENNZEICHNET DURCH**
eine Ausführung der Verbindungsprofile (3,4) und/oder des Verbindungselements (8) in einem Kunststoff-Spritzguss.

**16.** Verwendung der formschlüssigen Verbindungseinrichtung (1) für zwei Bauelemente (2) mit einem ersten Verbindungsprofil (3) und einem diesem im verbundenen Zustand der Verbindungseinrichtung (1) gegenüberliegenden weiteren Verbindungsprofil (4), die jeweils einem Bauelement (2) zugeordnet sind und eine obere Profilleiste (5) und eine untere Profilleiste (6) mit Hinterschneidungen (7) aufweisen, in die im verbundenen Zustand ein Verbindungselement (8) mit zu den Hinterschneidungen (7) komplementären Hinterschneidungen (9) eingeschoben ist, nach einem oder mehreren der vorangehenden Ansprüche für Solarmodule.
